## Europäisches Patentamt

## European Patent Office

## Office européen des brevets

(11) Veröffentlichungsnummer : **0 022 508**
**B1**

# EUROPÄISCHE PATENTSCHRIFT

(45) Veröffentlichungstag der Patentschrift :
15.05.85

(21) Anmeldenummer : **80103713.6**

(22) Anmeldetag : **30.06.80**

(51) Int. Cl.⁴ : **B 65 G 53/48**

(54) Gutzuführeinrichtung für einen mechanischen oder pneumatischen Steilförderer.

(30) Priorität : **12.07.79 DE 2928162**

(43) Veröffentlichungstag der Anmeldung :
**21.01.81 Patentblatt 81/03**

(45) Bekanntmachung des Hinweises auf die Patenterteilung : **15.05.85 Patentblatt 85/20**

(84) Benannte Vertragsstaaten :
**CH FR GB IT LI NL SE**

(56) Entgegenhaltungen :
**AT-B- 238 637**
**AT-B- 323 053**
**DE-A- 2 149 647**
**DE-A- 2 605 313**
**DE-B- 2 105 143**
**DE-B- 2 202 609**
**DE-B- 2 528 483**
**DE-C- 738 492**
**DE-C- 914 955**
**DE-C- 1 506 997**
**GB-A- 1 366 751**
**US-A- 3 975 058**

(73) Patentinhaber : **Bühler-MIAG GmbH**
**Ernst-Amme-Strasse 19**
**D-3300 Braunschweig (DE)**

(72) Erfinder : **Olsztynski, Adalbert**
**Mühlenweg 15**
**D-3180 Wolfsburg (DE)**
Erfinder : **Hardegen, Bernd**
**An der Paulikirche 5**
**D-3300 Braunschweig (DE)**

(74) Vertreter : **Geyer, Werner, Dr.-Ing. et al**
**Patentanwälte GEYER, HAGEMANN & PARTNER**
**Postfach 860329 Ismaninger Strasse 108**
**D-8000 München 86 (DE)**

**Beschreibung**

Die Erfindung bezieht sich auf eine Gutzuführeinrichtung für einen mechanischen oder pneumatischen Steilförderer mit einem unten am Traggerüst des Steilförderers gelagerten Ausleger, der ein rotierendes Gutaufnahmewerkzeug aufweist, welches das Gut aufnimmt und einem in ihm angeordneten Förderer zufördert, wobei im Ausleger wenigstens eine im wesentlichen der Länge des Gutaufnahmewerkzeuges entsprechende Gutdurchtrittsöffnung zur Überleitung des vom Gutaufnahmewerkzeug aufgenommenen Gutes an den innenliegenden Förderer vorgesehen ist.

Derartige Einrichtungen haben die Aufgabe, das abzufördernde Gut von Haufen zu lösen, es auf- bzw. mitzunehmen und dem Steilförderer zu übergeben oder in dessen Aktionsbereich zu transportieren, wobei der Steilförderer ein Saugförderrohr, ein Becher- oder Kettenelevator oder eine Förderbandkombination, etwa aus einem Kasten- bzw. Zellenband und Deckband oder aus Gurtband und Klemmband bestehend, ist.

Aus der DE-A1-22 10 311 ist es bekannt, an den Steilförderer in Form eines Becherwerkes unten einen in vertikaler Ebene schwenkbeweglichen Ausleger, der längenveränderbar ausgebildet sein kann, vorzusehen und an diesem eine umlaufende Kratzerkette als Gutaufnahmewerkzeug anzubringen, deren Kratzbleche das Gut ablösen und es über eine Bodenplatte oder in einem Trog zu dem Becherwerk hin und in dessen Becher hineintransportieren.

Aus der DE-B2-25 28 483 ist weiterhin eine Einrichtung bekannt, bei der das untere, biegeelastische Ende eines Saugförderrohres mit einer breiten Saugdüse versehen und auf einem Raupenfahrwerk plaziert ist und wobei unmittelbar vor der Saugdüse eine Schürfschnecke angeordnet ist, die von um eine horizontale Achse schwenkbaren, an dem Raupenfahrwerk gelagerten Tragarmen aufgenommen wird und das von ihr abgelöste bzw. aufgelockerte Gut der Saugdüse zuführt.

Zum Entladen von Schiffen ist weiterhin aus der DE-C-15 06 997 bereits ein Gerät bekannt, bei dem ein Verlorengehen von durch das Aufnahmewerkzeug aufgenommenem Gut vermieden ist. Bei ihm weist das Gerüst des Steilförderers unten einen rohrförmigen Ausleger auf, an dessen freiem Ende stirnseitig ein Schaufelrad als Gutaufnahmewerkzeug angeordnet ist und der in seinem Inneren den abgekröpften Abschnitt des von zwei Förderbändern gebildeten Steilförderers aufnimmt, wobei das vom Schaufelrad aufgenommene Gut über eine in seinem Inneren befindliche Schurre auf das bis unter die Schurre geführte eine Förderband gelangt und von diesem stirnseitig in den Ausleger hinein und zwischen die Fördertrume der beiden Förderbänder des Steilförderers bewegt wird. Weiterhin ist unten am Ausleger eine Räumschaufel im Bereich zwischen Schaufelrad und Steilfördertraggerüstmitte vorgesehen, die das Gut erfaßt und beim Drehen des Traggerüstes in den Wirkungsbereich des Schaufelrades schiebt, so daß es von dort von diesem aufgenommen werden kann.

Eine Gutzuführeinrichtung der eingangs genannten Art wird schließlich in der GB-A-560 751 beschrieben, wobei das rotierende Gutaufnahmewerkzeug innerhalb eines festen Gehäuses angeordnet ist. Durch unten im Gehäuse angeordnete Öffnungen kann das Gut beim Absinken des Auslegers auf das Gut in das Gehäuse hinein eindringen, wo es dann von dem Gutaufnahmewerkzeug erfaßt, innerhalb des Gehäuses nach oben transportiert und dort durch die Gutdurchtrittsöffnung dem innenliegenden Schneckenförderer zugeführt wird.

Ausgehend hiervon liegt der Erfindung die Aufgabe zugrunde, eine Gutzuführeinrichtung der eingangs genannten Art so weiterzubilden, daß eine Verbesserung in bezug auf die Förderleistung sowie hinsichtlich der vom Abräumwerkzeug erfaßbaren Aufnahmefläche bei der Abförderung des Gutes erzielt sowie gleichzeitig eine hervorragende Zugänglichkeit des Gutaufnahmewerkzeuges gewährleistet wird. Dies wird erfindungsgemäß bei einer Vorrichtung gemäß dem Oberbegriff des Patentanspruchs 1 dadurch erreicht, daß der Ausleger als Hohlzylinder ausgebildet ist, dessen Außenmantel als Auflager für das Gutaufnahmewerkzeug dient, der Förderer im Inneren des Auslegers ein Förderband ist und als Gutaufnahmewerkzeug eine frei von außen an ihrem ganzen Umfang zugängliche Schaufeltrommel vorgesehen ist, deren Mantel über seine gesamte Länge mit Schaufeln besetzt ist. Aufgrund der erfindungsgemäßen Ausgestaltung erfolgt die Gutaufnahme über die gesamte Länge des Auslegers, wobei die Schnittlänge des Aufnahmewerkzeuges auf die ganze Auslegerlänge vergrößert wird, so daß pro Zeiteinheit eine erheblich größere Gutmenge aufgenommen und dem Steilförderer zugeführt werden kann als bei herkömmlichen Gutzuführeinrichtungen. Weiterhin kann auch in unmittelbarer Nähe des Steilförderertraggerüstes noch eine Gutaufnahme erfolgen, wodurch vom Abräumwerkzeug ohne seitliches Verfahren des Steilförderertraggerüstes nicht erreichbare Bereiche zwischen letzterem und ihm auf ein Minimum reduziert sind. So durch ergibt sich insgesamt eine wesentliche Verbesserung des Gutaufnahmewirkungsgrades aufgrund optimaler Schnittfläche, hoher Schnittfolge sowie verlustloser Abgabe des aufgenommenen Gutes und damit eine erhebliche Steigerung der Förderleistung. Ferner wird auch noch ein Maximum an vom Abräumwerkzeug erfaßter Ladefläche sowie eine Verminderung der Arbeitsbewegungen des Steilförderertraggerüstes und ein Beschränken der Arbeitsbewegungen im wesentlichen auf den Ausleger bzw. das von ihm getragene Gutaufnahmewerkzeug erzielt.

In vorteilhafter Ausgestaltung der Erfindung wird vorgesehen, daß der Ausleger vertikal zum Traggerüst verschwenkbar angeordnet ist.

Eine weitere vorteilhafte Ausgestaltung der Erfindung besteht darin, daß der Ausleger ein einteiliger Hohlzylinder mit einer durchgehenden Gutdurchtrittsöffnung ist, oder, gleichermaßen vorzugsweise, daß er aus mehreren miteinander verbunden Hohlzylinderschüssen besteht, deren jeder eine Gutdurchtrittsöffnung aufweist, beispielsweise wenn die Einrichtung im Baukastensystem gefertigt werden soll, um in einer einfachen Weise Geräte unterschiedlicher Länge erstellen zu können. Bildet der Ausleger selbst unmittelbar die Förderfläche, auf der das Gut entlang bewegt wird, so empfiehlt es sich, den Hohlzylinder bzw. die Hohlzylinderschüsse doppelwandig, d. h. mit Innenrohr und Außenrohr, auszubilden : dies ergibt den Vorteil, daß bei Verschleiß nicht der gesamte Ausleger, sondern lediglich das Innenrohr ausgewechselt werden muß.

Bei einer weiteren vorteilhaften Ausgestaltung der Erfindung ist die Schaufeltrommel aus mehreren axialen Trommelabschnitten zusammengesetzt, von denen jeder mit einer Vielzahl über seinen Umfang verteilter Schaufeln ausgerüstet ist. Vorzugsweise sind dabei die Trommelabschnitte drehbeweglich auf dem Ausleger gelagert und bestehen aus ringförmigen Scheiben sowie an diesen Scheiben befestigten Schaufeln. Hierdurch läßt sich eine baulich einfache Konstruktion besonders geringer Masse erreichen.

Um ein allmähliches Aufnehmen und Abgeben des Gutes sicherzustellen und damit ruckartige Belastungen bzw. Entlastungen der Schaufeltrommel zu vermeiden, sind in weiterer vorteilhafter Ausgestaltung der Erfindung die Schaufeln eines Trommelabschnittes gegenüber den Schaufeln des angrenzenden Trommelabschnittes in Umfangrichtung versetzt angeordnet. Weiterhin vorzugsweise werden die Trommelabschnitte mit unterschiedlicher Drehrichtung angetrieben : durch entsprechendes gegensinniges Drehen der einzelnen Schaufeltrommelabschnitte ist es möglich, die auf letztere wirkenden Momente herabzusetzen.

Eine weitere vorteilhafte Ausgestaltung der Erfindung besteht darin, daß bei einer erfindungsgemäßen Gutzuführeinrichtung das Förderband im Inneren des Auslegers als endlos geführtes Kasten- oder Zellenband gestaltet ist, das gleichzeitig den Steilförderer bildet.

Die Erfindung wird anhand des in den Zeichnungen dargestellten Ausführungsbeispiels im nachfolgenden noch näher erläutert. Es zeigen :

Figur 1 einen Mittellängsschnitt durch eine beispielsweise Ausführungsform einer erfindungsgemäßen Gutzuführeinrichtung, sowie

Figur 2 einen Querschnitt nach Linie IV-IV in Figur 1 in vergrößertem Maßstab.

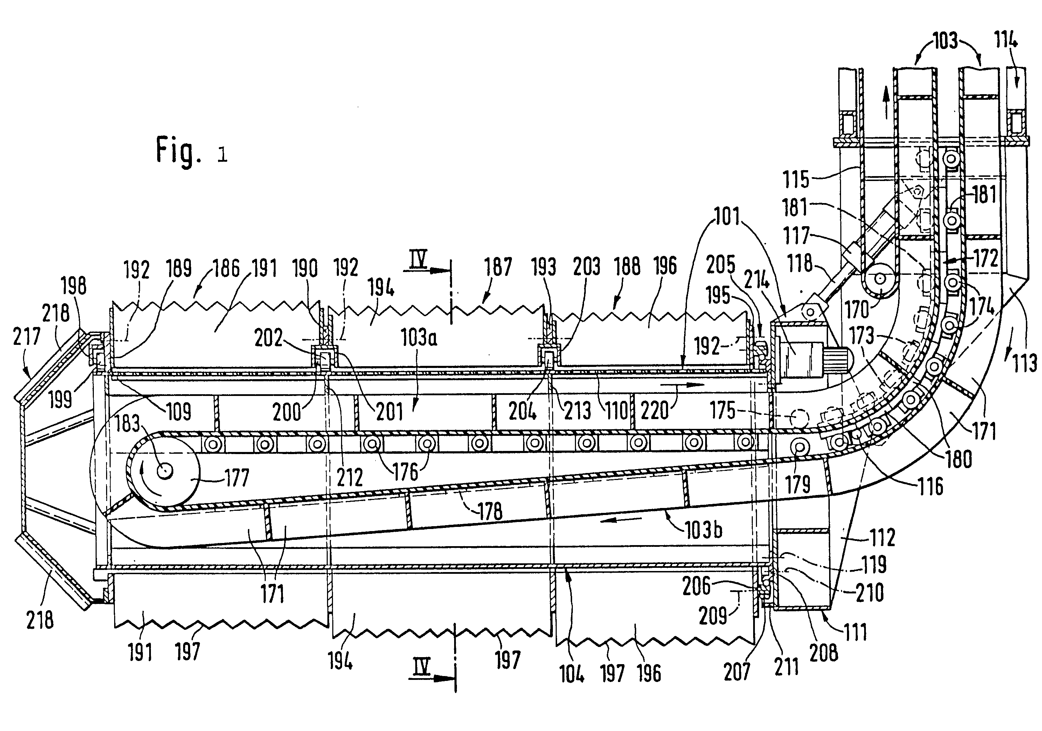

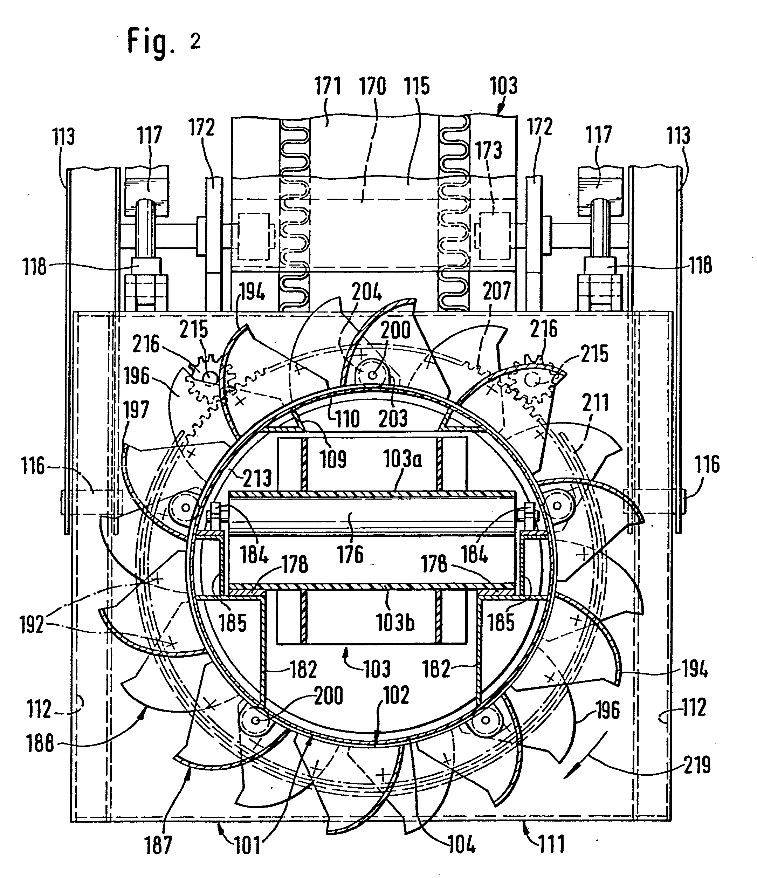

Die in den Figuren 1 und 2 dargestellte Gutzuführeinrichtung umfaßt drei wesentliche Baugruppen, nämlich einen Ausleger 101, eine auf diesem drehbeweglich gelagerte Schaufeltrommel 102 sowie einen im Inneren des Auslegers 101 angebrachten Förderer in Form eines Zellenbandes 103, das gleichzeitig den Steilförderer bildet. Der Ausleger 101 besteht aus einem einteiligen Hohlzylinder 104 mit einer von einem Gitterrost 110 abgedeckten, über nahezu seine gesamte Länge sich erstreckenden Gutdurchtrittsöffnung 109 sowie aus einem mit dem Hohlzylinder 104 durch Schrauben 119 fest verbundenen Lagerteil 111. Zwei seitlich am Lagerteil 111 vorgesehene Gelenkansätze 112 stecken in zwei entsprechend angeordneten Gelenkansätzen 113 eines Traggerüstes 114 und sind mit diesen durch Achsen 116 gelenkig verbunden. Das Traggerüst 114 nimmt den vertikalen Abschnitt des Zellenbandes 103, der den eingentlichen Steilförderer verkörpert, auf. Im senkrechten Abschnitt des Zellenbandes 103 ist seinem Fördertrum 103a ein Deckband 115 zugeordnet, das über eine im Traggerüst 114 angeordnete Bandtrommel 170 geführt ist und die Zellen 171 des Zellenbandes 103 gegen Entleeren abschließt. Zum In-Position-Halten und Verschwenken des Auslegers 101 in vertikaler Ebene dienen zwei Zylinder-Kolbensysteme, deren Zylinder 117 mit dem Traggerüst 114 und deren Kolbenstangen 118 mit dem Lagerteil 111 gelenkig verbunden sind.

Das Leertrum 103b des Zellenbandes 103 verläuft von der oberen, nicht sichtbaren Umlenkstation abwärts zu einer Gruppe Führungsrollen 174 auf der einen Seite einer in sich beweglichen Rollenhalterung 172 und von hier über eine Führungsrolle 179 im Lagerteil 111 sowie über eine Reihe Gleitplatten 178 im Hohlzylinder 104 zu einer im vorderen Ende des Hohlzylinders 104 angeordneten Umlenktrommel 177. Das Fördertrum 103a des Zellenbandes 103 verläuft von der Umlenktrommel 177 über eine Reihe Tragrollen 176 im Hohlzylinder 104, weiter über eine Führungsrolle 175 im Lagerteil 111 und über eine Gruppe Führungsrollen 173 auf der anderen Seite der Rollenhalterung 172 nach oben zur besagten Umlenkstation. Die Rollenhalterung 172 ist in dem Traggerüst 114 aufgehängt und besteht aus gelenkig miteinander verbundenen Gliedern 180, die seitlich je zwei Lager 181 aufnehmen, in denen je eine Führungsrolle 173 bzw. 174 mit Hilfe ihres Lagerzapfens gelagert ist. Die Gleitplatten 178 sind in Längsrichtung des Zellenbandes 103 mit Abstand zueinander auf zwei stufenförmigen Podesten 182 angebracht, die im Hohlzylinder 104 queraxial einander gegenüberliegend angeschweißt sind (Figur 2). Die Umlenktrommel 177 ist auf einer Achse 183 drehbar gelagert, die von zwei nicht dargestellten, im Hohlzylinder 104 abgestützten Lagern aufgenommen wird. Die Tragrollen 176 sind je in zwei Lagern 184 drehbeweglich gelagert, die auf zwei stufenförmigen, am Hohlzylinder 104 fixierten Podesten 185 angebracht sind. Der Antrieb des Zellenbandes 103 erfolgt in der oberen Umlenkstation durch einen bekannten elektromotorischen Bandtrommelantrieb.

Die Schaufeltrommel 102 umfaßt drei unmittelbar aneinandergrenzende, gleichsinnig angetriebene Trommelabschnitte 186, 187, 188, die zu einer kompakten Einheit verbunden sind. Der Trommelabschnitt 186 besteht aus einer ringförmigen Scheibe 189 und einer mit dem Trommelabschnitt 187 gemeinsamen, ringförmigen Scheibe 190 sowie aus mit den Scheiben 189 und 190 fest, aber lösbar durch Schrauben 192 verbundenen Schaufeln 191. Der Trommelabschnitt 187 setzt sich zusammen aus der mit dem Trommelabschnitt 186 gemeinsamen Scheibe 190, einer mit dem Trommelabschnitt 188 gemeinsamen ringförmigen Scheibe 193 und aus mit den Scheiben 190 sowie 193 durch Schrauben 192 verbundenen Schaufeln 194. Der Trommelabschnitt 188 besteht aus der mit dem Trommelabschnitt 187 gemeinsamen Scheibe 193, einer ringförmigen Scheibe 195 und aus mit den Scheiben 193 und 195 durch Schrauben 192 verbundenen Schaufeln 196. Die mit einer gezahnten Schneidkante 197 versehenen Schaufeln 191 bzw. 194 bzw. 196 jedes Trommelabschnittes 186 bzw. 187 bzw. 188 sind mit gleichem Abstand zueinander ringsherum am Umfang der zugeordneten Scheiben 189, 190, 193, 195 angeordnet. Die Schaufeln 191 bzw. 194 bzw. 196 eines Trommelabschnittes sind gegenüber den Schaufeln des benachbarten Trommelabschnittes in Umfangsrichtung versetzt (Figur 2). Zum rollenden Abstützen der Trommelabschnitte 186, 187, 188 auf dem Hohlzylinder 104 sind an ihren Scheiben 189, 190, 193 mehrere Rollen angebracht, nämlich an der Scheibe 189 fünf in an ihr befestigten, äquidistant am Umfang plazierten Rollenhaltern 198 auf Achsen 200 gelagerte Rollen 199, an der Scheibe 190 fünf in an ihr angebrachten, gleichmäßig am Umfang verteilten Rollenhaltern 201 auf Achsen 200 gelagerte Rollen 202 sowie an der Scheibe 193 fünf in an ihr fixierten, äquidistant am Umfang angeordneten Rollenhaltern 203 auf Achsen 200 gelagerte Rollen 204. An der Scheibe 295 des Trommelabschnittes 188 ist der eine mit einer Verzahnung 207 versehene Lagerring 206 einer Kugeldrehverbindung 205 mittels Schrauben 209 befestigt. Der andere Lagerring 208 der Kugeldrehverbindung 205 ist durch Schrauben 210 fest mit dem Lagerteil 111 verbunden. Ein am Lagerteil 111 angebrachtes Abdeckblech 211 dichtet die Kugeldrehverbindung 205 bzw. deren Verzahnung 207 nach unten hin gegen das Gut ab. Damit die abstützende Wirkung der Rollen 202 und 204 während ihrer Bewegung über die Durchtrittsöffnung 109 nicht unterbrochen wird, ist der Gitterrost 110 im Bereich der Laufbahn der Rollen 202 durch einen ringförmigen Steg 212 sowie im Bereich der Laufbahn der Rollen 204 durch einen ringförmigen Steg 213 abgestützt, wobei die Stege 212 und 213 mit dem Gitterrost 110 sowie mit dem Hohlzylinder 104 verschweißt sind. Für die Drehbewegung der Schaufeltrommel 102 sind oben in dem Lagerteil 111 zwei Getriebemotoren 214 angeordnet, die sie über je ein auf ihrer Abtriebswelle 315 drehfest gelagertes, mit der Verzahnung 207 des Lagerringes 206 der Kugeldrehverbindung 205 in Eingriff stehendes Ritzel 216 gemeinsam antreiben.

Am vorderen Ende der Schaufeltrommel 102 ist ein kegelstumpfförmiges Kopfstück 217 mit mehreren über seinen Umfang verteilten Räumblechen 218 angeordnet, das mit durch die Schrauben 192 gehalten ist und bezweckt, ein stirnseitiges Eindrigen der Einrichtung in das Gut bzw. einen Guthaufen zu erleichtern.

Die Arbeitsweise der Einrichtung nach den Figuren 1 und 2 ergibt sich wie folgt:

Im Betrieb laufen das Zellenband 103 und das ihm zugeordnete Deckband 115 kontinuierlich um. Nachdem durch entsprechendes Verfahren des Traggerüstes 114 und durch Drehen des Auslegers 101 in horizontaler Ebene sowie durch Verschwenken desselben in vertikaler Ebene die Einrichtung in Arbeitsstellung gebracht ist, werden die beiden Getriebemotoren 214 betätigt und die Einrichtung weiter in das Gut hineinbewegt. Die Getriebemotoren 214 treiben die Schaufeltrommel 102 über ihre Abtriebswellen 215 und Ritzel 216 sowie über die Verzahnung 207 des Lagerringes 206 der Kugeldrehverbindung 205 in Drehrichtung gemäß Pfeil 219 (Figur 2) an. Die Schaufeln 191, 194, 196 der drei Trommelabschnitte 186, 187, 188 dringen mit Unterstützung ihrer verzahnten Schneidkante 197 in das Gut ein, schöpfen es ein und nehmen es bei ihrer Rotation nach oben mit, bis es infolge Schwerkraft durch den Gitterrost 110 und die Gutdurchtrittsöffnung 109 hindurch in das Innere des Hohlzylinders 104 und in die Zellen 171 des Fördertrums 103a des Zellenbandes 103 fällt. Das hier gleichzeitig als Steilförderer fungierende Zellenband 103 transportiert das Gut in Richtung des Pfeiles 220 (Figur 1) aus dem Ausleger 101 bzw. aus dessen Hohlzylinderschuß 104 hinaus und dann mit Unterstützung des Deckbandes 115 aufwärts zu der besagten Umlenk- bzw. Übergabestation, von der aus das Zellenband beispielsweise in horizontaler Richtung weitergeführt und/oder das Gut einem nachgeschalteten Förderer bzw. seinem Bestimmungsort übergeben wird.

Mit der gezeigten Gutzuführeinrichtung wird eine vergleichsweise hohe Förderleistung erreicht, weil hier praktisch die gesamte Länge des Auslegers 101 zum Gutaufnehmen ausgenützt und das Gut von der Schaufeltrommel 102 mit hoher Geschwindigkeit durch ihre stetig umlaufenden Schaufeln aufgenommen sowie verlustlos dem Steilförderer zugebracht wird.

**Patentansprüche**

1. Gutzuführeinrichtung für einen mechanischen oder pneumatischen Steilförderer mit einem unten an Traggerüst (104) des Steilförderers gelagerten Ausleger (101), der ein rotierendes Gutaufnahmewerkzeug (102) aufweist, welches das Gut aufnimmt und einem in ihm angeordneten Förderer (103) zufördert, wobei im Ausleger (101) wenigstens eine im wesentlichen der Länge des Gutaufnahmewerkzeuges (102) entsprechende Gutdurchtrittsöffnung (109) zur Überleitung des vom Gutaufnahmewerkzeug (102) aufgenommenen Gutes an den innenliegenden Förderer (103) vorgesehen ist, dadurch gekennzeichnet, daß der Ausleger (101) als Hohlzylinder (104) ausgebildet ist, dessen. Außenmantel als Auflager für das Gutaufnahmewerkzeug (102) dient, der Förderer (103) im Inneren des Auslegers (101) ein Förderband ist, und daß als Gutaufnahmewerkeug eine frei von außen an ihrem ganzen Umfang zugängliche Schaufeltrommel (102) vorgesehen ist, deren Mantel über seine gesamte Länge mit Schaufeln (191, 194, 196) besetzt ist.

2. Gutzuführeinrichtung nach Anspruch 1, dadurch gekennzeichnet, daß der Ausleger (101) vertikal zum Traggerüst (114) verschwenkbar angeordnet ist.

3. Gutzuführeinrichtung nach Anspruch 1 oder 2, dadurch gekennzeichnet, daß der Ausleger (101) ein einteiliger Hohlzylinder (104) mit einer durchgehenden Gutdurchtrittsöffnung (109) ist.

4. Gutzuführeinrichtung nach Anspruch 1 oder 2, dadurch gekennzeichnet, daß der Ausleger aus mehreren miteinander verbundenen Hohlzylinderschüssen besteht, deren jeder eine Gutdurchtrittsöffnung aufweist.

5. Gutzuführeinrichtung nach einem der Ansprüche 1 bis 4, dadurch gekennzeichnet, daß der Hohlzylinder bzw. die Hohlzylinderschüsse doppelwandig ist bzw. sind.

6. Gutzuführeinrichtung nach einem der Ansprüche 1 bis 5, dadurch gekennzeichnet, daß die Schaufeltrommel (102) aus mehreren axialen Trommelabschnitten (186, 187, 188) zusammengesetzt ist, von denen jeder mit einer Vielzahl über seinen Umfang verteilter Schaufeln (191, 194, 196) ausgerüstet ist.

7. Gutzuführeinrichtung nach Anspruch 6, dadurch gekennzeichnet, daß die Trommelabschnitte (186, 187, 188) drehbeweglich auf dem Ausleger (101) gelagert sind und aus ringförmigen Scheiben (189, 190, 193, 195) sowie an diesen befestigten Schaufeln (191, 194, 196) bestehen.

8. Gutzuführeinrichtung nach Anspruch 7, dadurch gekennzeichnet, daß die Schaufeln (194) eines Trommelabschnittes (187) gegenüber den Schaufeln (191, 196) des angrenzenden Trommelabschnittes (186, 188) in Umfangsrichtung versetzt sind.

9. Gutzuführeinrichtung nach Anspruch 6, dadurch gekennzeichnet, daß die Trommelabschnitte (186, 187, 188) mit unterschiedlicher Drehrichtung angetrieben sind.

10. Gutzuführeinrichtung nach einem der Ansprüche 1 bis 9, dadurch gekennzeichnet, daß das Förderband als Zellenband (103, 171) gestaltet ist und gleichzeitig den Steilförderer bildet.

## Claims

1. A feeder for a mechanical or pneumatic steep conveyor comprising an extension arm (101) which is mounted at the botton of the conveyor support structure (104) and which has a rotating material-receiving tool (102) which receives the material and supplies the same to a conveyor (103) disposed in such tool (102), the arm (101) being formed with at least one aperture (109) through which the material can pass, which corresponds substantially to the length of the material-receiving tool (102) and which serves to convey the material received thereby to the internal conveyor (103), characterised in that the arm (101) is a hollow cylinder (104) whose outer shell serves as a support for the material-receiving tool (102) ; The conveyor (103) inside the arm (101) is a conveyor belt, and the material-receiving tool is a bladed drum (102) whose entire periphery is freely accessible from the outside and whose outside surface has blades (191, 194, 196) disposed over its whole length.

2. A feeder according to claim 1, characterised in that the arm (101) is adapted to pivot vertically relatively to the support structure (114).

3. A feeder according to claim 1 or 2, characterised in that the arm (101) is a unitary hollow cylinder (104) formed with a continuous aperture (109) through which the material can pass.

4. A feeder according to claim 1 or 2, characterised in that the arm comprises a number of interconnected hollow cylindrical sections each formed with an aperture through the material can pass.

5. A feeder according to any of claims 1 to 4, characterised in that the hollow cylinder or the hollow cylinder sections is or are double-walled.

6. A feeder according to any of claims 1 to 5, characterised in that the bladed drum (102) is combined from a number of axial drum sections (186-188) each having a number of blades (191, 194, 196) distributed over its periphery.

7. A feeder according to claim 6, characterised in that the drum sections (186-188) are rotatably mounted on the arm (101) and are embodied by annular discs (189, 190, 193, 195) and blades (191, 194, 196).

8. A feeder according to claim 7, characterised in that the blades (194) of a drum section (187) are staggered peripherally in relation to the vanes (191, 196) of the adjacent drum section (186, 188).

9. A feeder according to claim 6, characterised in that the drum sections (186-188) are driven in different directions of rotation.

10. A feeder according to any of claims 1 to 9, characterised in that the conveyor belt is a honeycomb belt (103, 171) and also forms the steep conveyor.

## Revendications

1. Dispositif d'alimentation en produit d'un élévateur mécanique ou pneumatique comportant une console (101) placée en bas sur le bâti (114) de l'élévateur, qui comporte un outil rotatif de prélèvement du produit et l'amène à un transporteur (103) placé à l'intérieur, la console (101) comportant au moins une ouverture de passage du produit (109) correspondant sensiblement à la longueur de l'outil de prélèvement (102), pour transférer le produit prélevé par l'outil de prélèvement (102) sur le transporteur intérieur (103), caractérisé en ce que la console (101) est réalisée sous la forme d'un cylindre creux (104) dont l'enveloppe externe constitue un appui pour l'outil de prélèvement de produit (102), en ce que le transporteur (103) situé à l'intérieur de la console (101) est une bande transporteuse, et en ce que l'outil de prélèvement du produit est un tambour à godets (102), librement accessible de l'extérieur sur toute sa périphérie, dont l'enveloppe comporte des godets (191, 194, 196) sur toute sa longueur.

2. Dispositif d'alimentation en produit selon la revendication 1, caractérisée en ce que la console (101) est disposée de façon à pouvoir basculer dans un plan vertical par rapport au bâti (114).

3. Dispositif d'alimentation en produit selon la revendication 1 ou 2, caractérisé en ce que la console (101) est un cylindre creux (104) en une seule pièce, comportant une ouverture de passage du produit (109) qui la traverse.

4. Dispositif d'alimentation en produit selon la revendication 1 ou 2, caractérisé en ce que la console comprend plusieurs éléments cylindriques creux reliés entre eux, dont chacun comporte une ouverture de passage du produit.

5. Dispositif d'alimentation en produit selon l'une des revendications 1 à 4, caractérisé en ce que le cylindre creux ou les éléments cylindriques creux est ou sont à double paroi.

6. Dispositif d'alimentation en produit, selon l'une des revendications 1 à 5, caractérisé en ce que le tambour à godets (102) se compose de plusieurs sections axiales de tambour (186, 187, 188) dont chacune comporte une pluralité de godets (191, 194, 196) répartis sur sa périphérie.

7. Dispositif d'alimentation en produit selon la revendication 6, caractérisé en ce que les sections de tambour (186, 187, 188) sont placées de façon à pouvoir tourner sur la console (101) et se composent de disques annulaires (189, 190, 193, 195), ainsi que de godets (191, 194, 196) fixés sur ceux-ci.

8. Dispositif d'alimentation en produit selon la revendication 7, caractérisé en ce que les godets (194) d'une section de tambour (187) sont décalés dans le sens périphérique, par rapport aux godets (191, 196) des sections de tambour (186, 188) contiguës.

9. Dispositif d'alimentation en produit selon la revendication 5, caractérisé en ce que les sections de tambour (186, 187, 188) sont entraînées dans des sens de rotation différents.

10. Dispositif d'alimentation en produit selon l'une des revendications 1 à 9, caractérisé en ce que la bande transporteuse est réalisée sous la forme d'une bande compartimentée (103, 171) et constitue en même temps l'élévateur.

Fig. 1

Fig. 2